# EUROPÄISCHE PATENTSCHRIFT

(11) **EP 0 319 781 B1**
(45) Veröffentlichungstag und Bekanntmachung des Hinweises auf die Patenterteilung: **19.06.1996**
(21) Anmeldenummer: 88119540.8
(22) Anmeldetag: 24.11.1988
(51) Int. Cl.: G08C 17/00, H04B 1/04, H04B 1/16

(54) **Handsender zur Aussendung codierter elektromagnetischer Impulse und darauf abgestimmter Empfänger**
Portable transmitter for the electromagnetic transmission of coded pulses, and tuned receiver therefor
Emetteur portatif pour la transmission d'impulsions électromagnétiques codées et récepteur accordé

(30) Priorität: 05.12.1987 DE 3741324
(43) Veröffentlichungstag der Anmeldung: 14.06.1989
(73) Patentinhaber: Gimbel, Karl-Heinz, Dipl. Ing., D-99994 Schlotheim (DE)
(72) Erfinder: Schulze, Matthias, D-6108 Weiterstadt (DE)
(74) Vertreter: Weber, Dieter, Dr.

(56) Entgegenhaltungen:
- CA-A- 994 866
- DE-A- 2 606 566
- DE-A- 2 824 421
- DE-A- 2 941 394
- DE-A- 3 104 242
- DE-A- 3 332 761
- GB-A- 1 095 227
- US-A- 4 684 853
- SIEMENS COMPONENTS, Band XXII, Nr. 2, April 1987, Seiten 56-58, Berlin, DE; R. EMSLANDER et al.: "Opening doors by RF"
- ELECTRONIQUE APPLICATIONS, Nr. 32, Seiten 33-36, Oktober-November 1983, Evry, FR; P.GUEULLE: "Une télécommande haute sécurité à un canal"

## Beschreibung

Die vorliegende Erfindung betrifft einen Handsender zur Aussendung codierter elektromagnetischer Impulse gemäß Oberbegriff des Anspruches 1, sowie einen darauf abgestimmten Empfänger gemäß Oberbegriff des Anspruches 9.

Der zugehörige Empfänger für den Empfang codierter elektromagnetischer Impulse besteht im wesentlichen aus einer Strom-/Spannungsversorgung, einer Antenne, einem integrierten Empfänger mit Hf- und Zf- Verstärkerstufen und einem Mischer zur Zwischenfrequenzerzeugung, einen Demodulator, einer Signalamplitudenregelung, einer Decodiereinheit mit Code-Wahlschaltung und einer Ein-/Ausgangsschaltung (interface).

Ein Sender und ein Empfänger der vorstehend beschriebenen Art sind aus der DE-A-29 41 394 bekannt. Diese befaßt sich mit dem Problem, Fehlbetätigungen zu vermeiden, im Falle von Störungen die Funktionsfähigkeit in einfacher Weise wiederherstellen zu können, und bei Verlust eine mißbräuchliche Verwendung des Senders zu vermeiden. Hierzu wird eine Trennung zwischen Sender und Codiereinrichtung und auch zwischen Empfänger und Codiereinrichtung vorgesehen, wobei diese beiden Elemente durch eine leicht lösbare Verbindung, wie zum Beispiel eine Buchsen-/Steckereinrichtung miteinander gekoppelt werden können. Der konkret dargestellte Empfänger gemäß Figur 3 dieser Druckschrift zeigt vier verschiedene Abgleichspulen. Im übrigen ist dieser Druckschrift keine Angabe über die erforderliche Mindestanzahl an Abgleichelementen und über Maßnahmen zu Vermeidung von Abgleichelementen zu entnehmen.

Ein Sende/Empfangssystem, welches aus dem oben erwähnten Sender und einem zugehörigen Empfänger besteht, kann zur Fernbedienung verschiedener Einrichtungen benutzt werden. Vorzugsweise finden derartige Sender-/Empfängersysteme Verwendung bei der ferngesteuerten Betätigung von Garagen- bzw. Einfahrtstoren, wobei der Sender im Auto mitgeführt und vom Fahrer oder Beifahrer betätigt wird. Dabei benötigt man im allgemeinen nur wenige Funktionen, beispielsweise je einen Schalter oder Taster für die Funktion "Öffnen" bzw. "Schließen".

Beim Betätigen des Senders, z.B. durch Drücken einer Taste "Öffnen" strahlt der Sender eine Folge elektromagnetischer Impulse aus, welche im wesentlichen einer binären Code-Zahl entsprechen, wobei eines der in Form von elektromagnetischen Impulsen abgestrahlten Bits der gewünschten Funktion, in dem gewählten Beispiel also dem "Öffnen" (des Garagentores), entspricht. Die übrigen Bits (beispielsweise 10) können am Sender einzeln eingestellt werden, wobei der zugehörige Empfänger eine Decodiereinheit mit einer analogen Bit-Einstellmöglichkeit aufweist, deren Einstellung mit derjenigen des Senders übereinstimmen muß, wenn die gewünschte Funktion (z.B. "Öffnen" oder "Schließen") ausgelöst werden soll. Der Empfänger setzt also die vom Sender abgestrahlte Folge elektromagnetischer Impulse in Binärzahlen um, ordnet (mindestens) eines der Bits einer bestimmten Funktion zu und vergleicht die übrigen sozusagen ein Codewort bildenden Bits mit der Bit-Einstellung seiner Decodiereinheit. Nur wenn das abgestrahlte binäre Codewort mit dem auf der Decodiereinheit eingestellten Codewort übereinstimmt, wird die gewünschte Funktion ausgelöst.

Ein solches binäres Codewort läßt sich als eine bestimmte Folge der Ziffern 0 und 1 darstellen. Da Sender und Empfänger das gleiche Codewort aufweisen müssen, ist die Wahrscheinlichkeit gering. daß - um beim Beispiel der Garagentore zu bleiben - beim Betätigen eines Senders vor dem Garagentor mit dem zugehörigen Empfänger sich auch gleichzeitig eines oder gar mehrere Garagentore der Nachbarn öffnen bzw. schließen, welche noch in der Reichweite des Senders liegen. Ein bisher bekanntes Sender-Empfängersystem weist ein Codewort mit einer Wortlänge von 12 Bit auf, so daß sich insgesamt bis zu 4096 verschiedene Codiermöglichkeiten ergeben. Dieses bisher bekannte System kann mit den Geräten aus vorliegender Patentanmeldung ebenfalls zusammenarbeiten.

Filter und Impulsformer sind notwendige Baueinheiten des Senders, um von dem Sender ausgehende Störimpulse zu vermeiden und die benötigte Hf-Bandbreite zu begrenzen, welche die für das Betreiben des Senders erforderliche Postzulassung ausschließen würde.

Selbstverständlich kann ein Empfänger Sendeimpulse mehrerer Sender empfangen und umsetzen, sofern diese nur die entsprechende codierte Impulsfolge aussenden. Da Garagen und Einfahrten oft von mehreren verschiedenen Persohen benutzt werden, kann also jede dieser Personen einen eigenen Sender im Auto oder auch in der Tasche mit sich führen und das Tor mit Hilfe des Senders bedienen. Dies gilt insbesondere für größere Garagenanlagen oder Tiefgaragen, die gemeinschaftlich von mehreren Anwohnern benutzt werden. Soll der Sender nicht nur im Auto mitgeführt, sondern beispielsweise auch in der Hand oder in einer Jacken- oder Hosentasche bequem getragen werden können, so kommt es sehr darauf an, daß er kleine Abmessungen und ein geringes Gewicht aufweist. Bisher ist erst eine relativ geringen Zahl von dafür geeigneten Einrichtungen mit entsprechenden Empfängern und Sendern ausgestattet. Neben der Verkleinerung des Senders ist es daher auch wünschenswert, den Aufbau von Empfänger und Sender zu vereinfachen und die Herstellungskosten zu reduzieren. Mit dem bisher bekannten Sender-Empfängersystem ist dies jedoch noch nicht in ausreichendem Maße gelungen.

Der vorliegenden Erfindung liegt daher die Aufgabe zugrunde, einen Sender und einen Empfänger mit den eingangs genannten Merkmalen zu schaffen, welche preiswerter und in kleineren Abmessungen herstellbar sind, wobei die bisherige Funktionssicherheit mindestens erhalten, nach Möglichkeit noch gesteigert werden soll.

Diese Aufgabe wird durch einen Sender mit den Merkmalen des Anspruchs 1 und durch einen Empfänger mit den Merkmalen des Anspruchs 9 gelöst.

Dem Fachmann sind die entsprechenden Schaltungen im Prinzip geläufig, insbesondere unter der Vorgabe, daß es sich um einfache (und preiswerte) Schaltungen handeln soll. Dadurch, daß der Oszillator ein sicheres Anschwingverhalten in einem relativ breiten Frequenzbereich um seine Nennfrequenz herum gewährleistet, kann man nämlich auf den bisher erforderlichen Abgleich des Oszillators verzichten. Auch das zwischen Endstufe und Antenne geschaltete steilflankige Tiefpaßfilter bedarf im Gegensatz zu dem voher an dieser Stelle verwendeten Bandpaß keines Abgleichs. Einig und allein die Antenne bzw. der Antennenschwingkreis hoher Güte muß noch abgeglichen werden, so daß eine maximale Ausgangsleistung erzielt wird. Im Gegensatz dazu, war bei dem vorbekannten Sender ein Abgleich dreier verschiedener Komponenten, nämlich des Oszillator-Schwingkreises des Bandpaßfilters und der Antenne notwendig, um eine maximale Ausgangsleistung einzustellen. Ein solcher Abgleich kann nur unter erheblichem Zeitaufwand von einem Fachmann durchgeführt werden und ist entsprechend kostenträchtig.

Mit den erfindungsgemäßen Maßnahmen wird also zum einen der Aufbau des Senders dadurch vereinfacht, daß weder im Oszillator noch im Filter Abgleicheinrichtungen vorgesehen sind, zum anderen werden Herstellungskosten dadurch eingespart, daß der Abgleichaufwand reduziert wird, da nur noch die Antenne auf maximale Ausgangsleistung einzustellen ist.

Für den Oszillator wird es gemäß der Erfindung bei weitem als ausreichend angesehen, wenn der Oszillator im Bereich von ∓ 10 % der Nennfrequenz betreibbar ist. In diesem Fall können nämlich relatiy preiswerte Bauteile verwendet werden, welche relativ große Herstellungstoleranzen aufweisen. Der Sender ist dann trotz dieser Herstellungstoleranzen noch voll funktionsfähig.

Konkret werden die gewünschten Eigenschaften des Oszillators dadurch verwirklicht, daß eine modifizierte Pierce Oszillatorschaltung für Obertonquarze verwendet wurde. Die Modifikationen betreffen zum einen die Realisierung mit einem geringeren Bauteileaufwand, zum anderen die Arbeitspunkeinstellung des Transistors im Hinblick auf Bauteiletoleranzen und oberwellenarme Schwingungen.

Die Frequenz, mit welcher der Sender abstrahlt, liegt vorzugsweise im Bereich zwischen 20 und 50 MHZ. Besonders bevorzugt sind die Frequenzen in 27 MHz und im 40 MHz Band. In diesem Frequenzbereich durchdringen die erzeugten elektromagnetischen Wellen noch gut die Karosserie üblicher PKW und auch Stahlbeton, so daß der Sender problemlos aus dem Inneren eines Kraftfahrzeuges heraus betrieben werden kann.

Zur Vereinfachung des Schaltungsaufbaues trägt eine weitere Maßnahme der Erfindung bei, wonach die Antennenspule über eine Anzapfung teilweise als Erregerspule geschaltet ist. Hierdurch kann eine getrennte Erregerspule entfallen. Die Antenne wird an einem Abgleichkondensator abgeglichen.

Erfindungsgemäß ist die Lage der Anzapfung an L 123 und auch der Wert des Koppelkondensators C 130 nach Gesichtspunkten der optimalen Anpassung zum vorausgehenden Tiefpaßfilter gewählt.

Weiterhin ist die erfindungsgemäße Schaltung dadurch gekennzeichnet, daß der Ausgang des Trapezformers (Miller-Integrator) direkt an der Niederpotentialseite des Endstufentransistors angeschlossen ist. Durch diese einfache Maßnahme erreicht man eine höhere Ausgangsleistung im Vergleich zu der bisher bekannten Schaltung.

Die Flankensteilheit des Tiefpaßfilters beträgt mindestens 60 dB zur 1. Oberwelle. Die bevorzugte Schaltung des Tiefpaßfilters ist unter dem Begriff Tiefpass nach Cauer Parametern bekannt.

Gemäß der vorliegenden Erfindung ist als Codiereinheit ein sogenannter Mikrocontroller mit einer wählbaren Codebitanzahl von 12 oder 22 vorgesehen.

Dabei ist für die Einstellung der Codezahl eine Diodenmatrixschaltung vorgesehen. Dabei ist weiterhin eine Lötbrücke vorgesehen, durch welchen die Codiereinheit wahlweise mit den beim bekannten Sender bzw. Empfänger üblichen 12 Bits oder in einer Betriebsart unter Verwendung von 22 Bits benutzt werden kann. Damit ist in vorteilhafter Weise der neue Sender nicht nur im Zusammenhang mit den zugehörigen neuen Empfängern, sondern auch mit dem bisher verwendeten Empfänger verwendbar.

Erfindungsgemäß sind in der Codiereinheit 4 Bits für verschiedene auszuführende Funktionen (Befehle) vorgesehen, welche über eine fest mit der Codiereinheit verschaltete Codierbrücke wählbar sind. Auf diese Weise ist es möglich, bis zu 16 verschiedene Funktionen an den Empfänger zu übermitteln, so daß sich die Verwendung des Sender-Empfängersystems nicht nur auf das Öffnen und Schließen von Garagentoren beschränkt, sondern mit Hilfe des Systems auch eine Reihe weiterer Funktionen ausführbar sind, die sich auch vorteilhaft zur Fernbedienung anderer Geräte einsetzen lassen. Dabei stehen bei der erfindungsgemäßen Codiereinheit immer noch mehr Bits für die Darstellung des Codewortes bzw. der Codezahl zur Verfügung, wodurch die Funktionssicherheit des Systems gegenüber dem bekannten System noch erhöht wird, da die unbeabsichtigte Auslösung fremder Geräte mit zunehmender Wortlänge des Codewortes immer unwahrscheinlicher wird.

Als besonders vorteilhaft hat es sich erwiesen, daß die einzelnen Bauelemente in SMT auf einer Platine angebracht werden. Diese Surface Mounted Technology erlaubt eine weitergehende Miniaturisierung des Sender- und Empfängeraufbaues und erweist sich auch bei der Herstellung als kostengünstig.

Die der Erfindung zugrundeliegende Aufgabe wird hinsichtlich des Empfängers dadurch gelöst, daß der ZF-Mischerteil einen sicher anschwingenden Oszillator aufweist, welcher im wesentlichen den gleichen Aufbau hat wie der Oszillator des zugehörigen Handsenders, daß der Ankopplungsschwingkreis der Antenne einen Abgleichkondensator aufweist und daß der Antennenschwingkreis einen kapazitiven Teiler zur Signalauskopplung in den integrierten Empfänger (I 4) aufweist.

Der Oszillator ist bereits im Zusammenhang mit dem Sender eingehend beschrieben worden, und seine Verwendung im Empfänger führt im wesentlichen zu den gleichen vorteilhaften Ergebnissen wie beim Sender, da nämlich ein Abgleich wiederum nur an der Eingangsantenne erfolgen muß. Der kapazitive Teiler am Ausgang der Antenne trägt weiter zur Vereinfachung des Schaltungsaufbaues bei, da an dieser Stelle bisher ein aus Spulen aufgebauter Übertrager verwendet wurde.

Zwar hat auch der in der integrierten Empfängerschaltung vorhandene ZF-Mischer (Zwischenfrequenzmischer) einen internen Oszillator, jedoch erweist sich dessen Verwendung gegenüber der Verwendung eines zusätzlichen externen Oszillators, wie gemäß der Erfindung vorgesehen, als nachteilig, da einige Parameter des internen Oszillators nicht beeinflußbar sind und er daher nicht sicher ohne Abgleich betrieben werden kann.

Weiterhin ist in dem ZF-Verstärkerteil zwischen den Signalausgang des ZF-Mischers und den Demodulator ein Filter niedriger Güte geschaltet, welches auch hier trotz der zu erwartenden Bauteiletoleranzen Korrekturen überflüssig macht.

Zur Einstellung des Arbeitspunktes des ZF-Mischers und zur Signalauskopplung ist erfindungsgemäß zwischen dem Mischerausgang und einem keramischen ZF-Filter ein Widerstand geschaltet. Auch dies bedeutet eine Vereinfachung gegenüber der bekannten Schaltung, die an dieser Stelle einen Schwingkreis vorsah.

In Analogie zum Sender ist bei dem erfindungsgemäßen Empfänger als Decodiereinheit ein Mikrocontroller mit einstellbarem Code vorgesehen. Auch die Decodiereinheit weist eine Diodenmatrixschaltung zur Einstellung des Codewortes bzw. der Codezahl auf. Eine Umschaltmöglichkeit auf das 12 Bit-System ist durchaus gegeben, jedoch bei dem neuen Empfänger nicht erforderlich, da bei Installation eines neuen Empfängers auch die zugehörigen Sender mit der vorzugsweise voll ausgenutzten Kapazität von 22 Bits zur Verfügung stehen.

Der Mikrocontroller in der Decodiereinheit ist erfindungsgemäß mit einer Reset-Schaltung verbunden. Eine derartige Reset-Schaltung ist unter Fachleuten auch unter dem Begriff "Watch Dog" ("Wachhund") bekannt und dient dazu, die Decodiereinheit im Falle zufällig aufgefangener Störimpulse oder auch u.U. im Falle eines Programmfehlers in einen normalen Betriebszustand zurückzubringen.

Bei dem erfindungsgemäßen Empfänger schließt an die Decodiereinheit eine Ein-/Ausgangsschaltung an, welche als Adapterschaltung ausgeführt ist und in Abhängigkeit von internen Schalterstellungen wahlweise einen Wechselstrom-, einen Gleichstrom- oder einen potentialfreien Schaltausgang aufweist. Diese verschiedenen Ausgänge entsprechen den auf dem Markt befindlichen verschiedenen Systemen von Garagentorantrieben, so daß durch Umstellen interner Lötbrücken in der Adapterschaltung ein und derselbe Empfänger zum Ansteuern aller derzeit bekannten Garagentor-Antriebssteuerungen und weiteren Anwendungen (wie z.B. einen fernbedienten Türöffner (Türsummer) benutzt werden kann.

Die Ausgangsschaltung weist weiterhin eine Reihe von verschiedenen Schutzschaltungen auf welche eine hohe Betriebssicherheit des Empfängers garantieren sollen. Dazu gehören eine Unterspannungserkennung, eine Power-on-Reset Schaltung, sowie ein Strombegrenzungs- und ein Verpolungsschutz.

Analog zum zugehörigen Sender ist auch der Empfänger in SMD-Technik hergestellt. Wegen der sehr kurzen und induktivitätsarmen Verbindungen zwischen den verschiedenen Bauelementen kommen die nach der SMD-Technik hergestellten Sender und Empfänger ihrem, der Schaltung entsprechenden, theoretischen Ideal sehr nahe.

Die Erfindung betrifft weiterhin ein neues Verfahren zum Codieren elektromagnetischer Sendeimpulse, bei welchem durch eine zeitliche Dreiteilung der Bitinformation des übertragenen Codes (Impulstelegramm) die Aussage über die logische Wertigkeit nach folgender Vorgabe derart erfolgt, daß nach einem Flankenabfall von "H" nach "L" und einem nachfolgenden Flankenanstieg von L nach H nach einem Drittel der für ein Bit vorgegebenen Übertragungszeit eine logische "0" übertragen wird, jedoch bei einem nachfolgenden Flankenanstieg von L auf H nach zwei Dritteln der für ein Bit vorgegebenen Übertragungszeit eine logische "1" übertragen wird, welches dadurch gekennzeichnet ist, daß ein 26 Bit langes Impulstelegramm, bestehend aus einem 22 Bit langen Informationsteil und einer sich daran anschließenden Synchronisationspause mit einer Länge von 4 Bit, bestehend aus einem "L"-Signal und einem Flankenübergang von L nach H nach dem zweiten Drittel des vierten Pausenbits verwendet wird.

Dieses Verfahren ermöglicht die Verwendung des vorstehend beschriebenen Senders und des zugehörigen Empfängers und trägt so zu dem vereinfachten Schaltungsaufbau bei gleichzeitiger Steigerung der Funktionssicherheit bei.

Weitere Vorteile, Merkmale und Anwendungsmöglichkeiten der vorliegenden Erfindung ergeben sich aus der nachfolgenden Beschreibung der Figuren, welche eine bevorzugte Ausführungsform des Senders und des zugehörigen Empfängers darstellen. Es zeigen:
Figur 1 ein Blockschaltbild des Senders,
Figur 2 ein Schaltungsschema des Senders,
Figur 3 ein Blockschaltbild des Empfängers und
Figur 4 und 5 das Schaltschema des Empfängers.

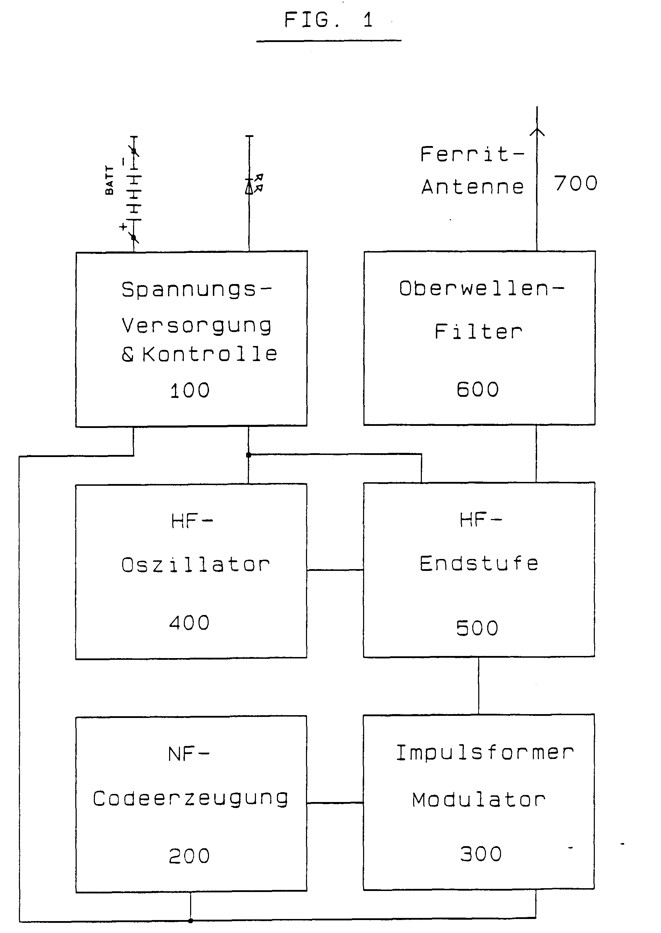

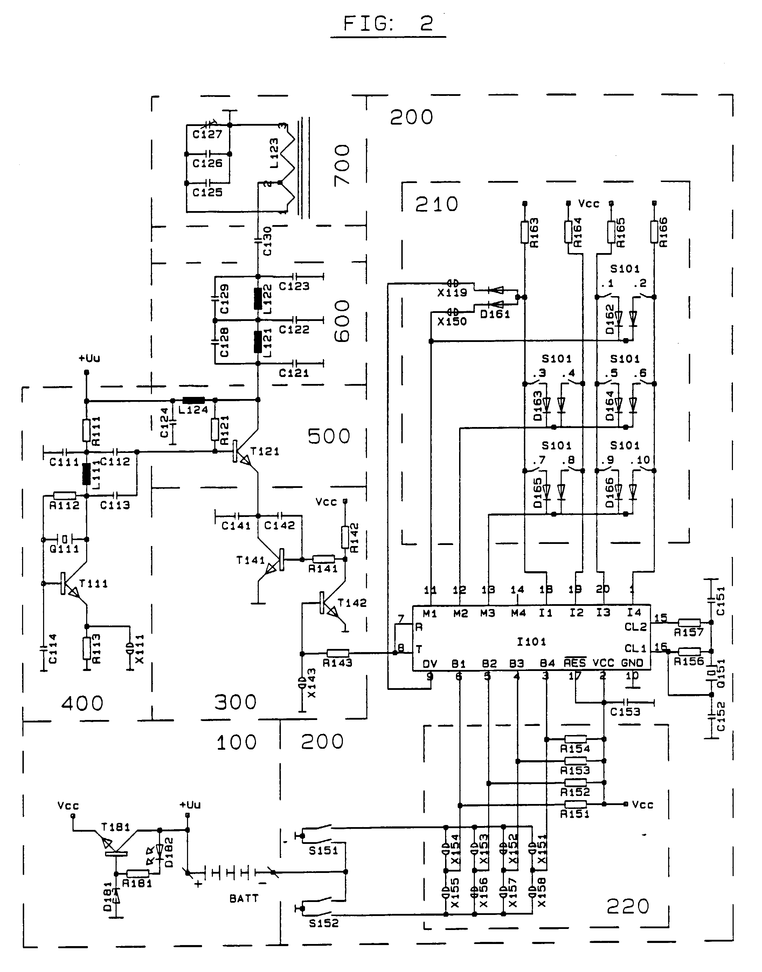

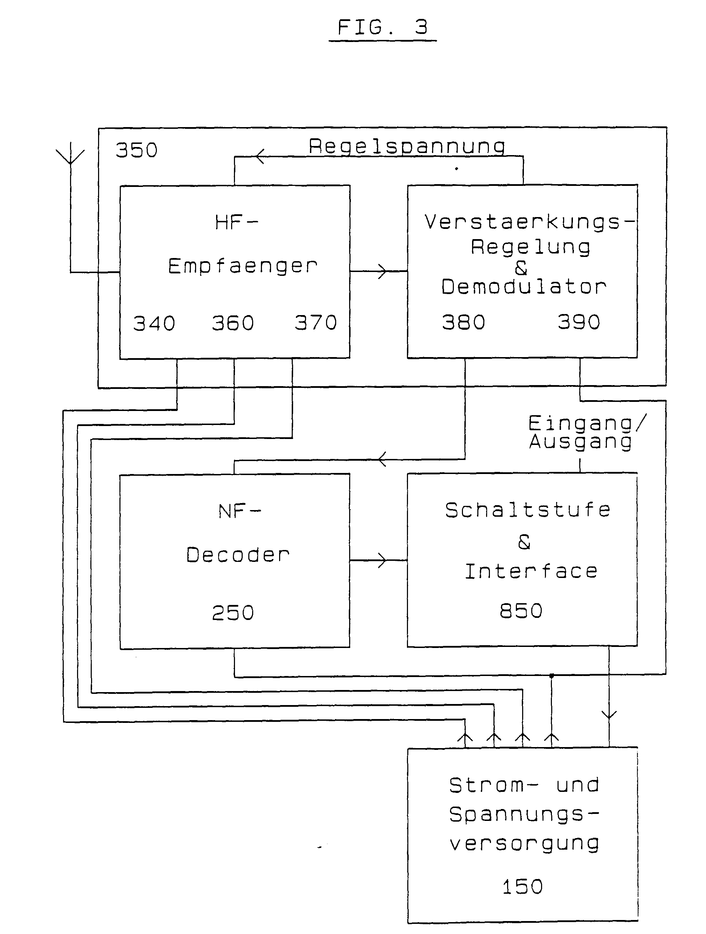

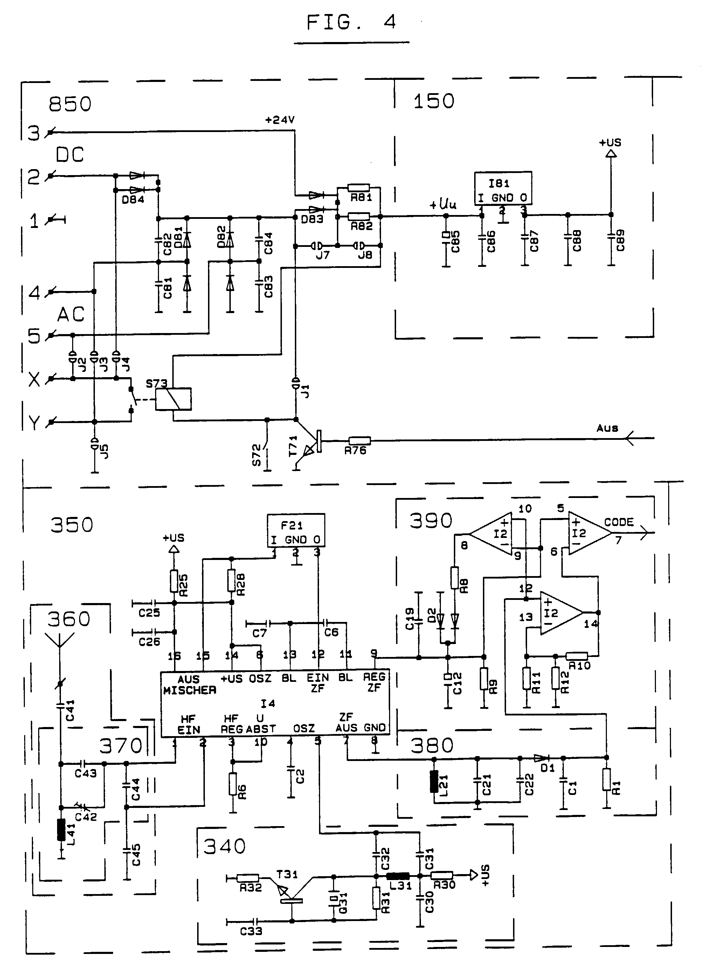

Gemäß Figur 1 besteht der Sender aus einer Spannungsversorgung, einer NF-Impulserzeugung (Niederfrequenz-Impulserzeugung), einem Impulsformer, einem HF-Oszillator (Hochfrequenz-Oszillator), einer HF-Endstufe, einem Oberwellenfilter und einer Ferritantenne. Die Spannungsversorgung liefert eine unstabilisierte (Batterie-) Spannung Uu und eine stabilisierte Spannung Vcc.

Wie man in Figur 2 erkennt, besteht die Spannungsversorgung im wesentlichen aus der Batterie BATT, welche direkt die Spannung Uu liefert, dem Widerstand R 181, den Dioden D 181 und D 182 sowie dem Transistor T 181, welche in der in Figur 1 dargestellten Verschaltung die stabilisierte Spannung Vcc liefern. Die Diode D 182 ist eine Leuchtdiode und zeigt die Betriebsbereitschaft (genügend Batteriespannung) des Senders an.

Die NF-Impulserzeugung erfolgt in der Codiereinheit 200 durch den Mikrocontroller I 101. Der Mikrocontroller I 101 ist ein maskenprogrammierter IC-Baustein mit einem ROM-Speicher von 512 Byte, welcher ein nicht veränderbares Programm für die Impulserzeugung enthält.

Die Impulsfolge, welche logisch einer Folge der Ziffern 0 und 1 entspricht, wird einerseits über eine Codierbrücke 220 und andererseits über einen sogenannten DIL-Schalter 210 (Dual In Line-Schalter) eingestellt. Der DIL-Schalter schaltet eine Diodenmatrix. Über diesen DIL-Schalter kann der Benutzer den ausgesendeten Code in 10 Bit verändern. Je nach Stellung der Lötbrücke (X 150) ist die Zahl der Codebits jedoch 12 oder 22. Beim 22-Bit-Code sind 8 der zusätzlichen Bits z.Zt. werksseitig voreingestellt. Die zwei bzw. vier restlichen Bits des Codetelegramms sind über die Codierbrücke 220 veränderbar. Durch die oben erwähnte werksseitige Codierung von 8 Bits kann jedoch trotz gleicher Stellung der DIL-Schalter ein unbeabsichtigtes Betätigen fremder Geräte verhindert werden, wenn die vom Kunden nicht zu verändernde Werkscodierung der Sender unterschiedlich ist.

Die Codierbrücke 220 dient darüber hinaus zur Festlegung der für die Übertragung gewünschter Funktionen benötigten Bits.

Der NF-Impulserzeugung ist ein Impulsformer nachgeschaltet, dessen Bauteile mit den Ziffern 14 beginnen. Dieser Impulsformer, im wesentlichen ein Miller Integrator, schrägt die Impulsflanken zur Reduzierung der Hf-Übertragungsbandbreite ab. Der Ausgang des Impulsformers, der bis zur Sättigungsspannung an Ground Potential herankommt, ist mit dem Emitter des Endstufentransistors T 121 verbunden, so daß die durch die Betriebsspannung begrenzte maximale Ausgangsleistung erzielt wird.

Der Hf-Oszillator besteht im wesentlichen aus dem Schwingkreis, welcher von der Spule L 111 und den Kondensator C 112 und C 113 gebildet wird, sowie aus dem Schwingquarz Q 111 und dem Transistor 111. Die Widerstände R 112 und 113 dienen der Einstellung des Arbeitspunkes und der Verstärkung der Oszillatorschaltung. C 114 bildet zusammen mit der resultierenden Schwingkreiskapazität (aus L 111, C 112, C 113) die Lastkapazität des Quarzes Q 110.

Die Endstufe besteht im wesentlichen aus dem Transistor T 121, der Spule L 124 und dem Widerstand R 121. R 121 bestimmt den Arbeitspunkt des Transistors, L 124 ist der Arbeitswiderstand und kompensiert die Transistor-Kollektorkapazität. C 124 und C 141 dienen lediglich zum Abblocken der Hochfrequenz. Dieser Endstufe folgt ein Tiefpaßfilter nach Cauer Parametern, welcher aus den Kondensatoren C 121, C 122, C 123, C 128, C 129 und den Spulen L 121 und L 122 aufgebaut ist.

Der Kondensator C 130 dient zusammen mit dem Anzapfpunkt der Antennenspule zur optimalen Leistungsanpassung der Hf an die Antenne. Der Antennenschwingkreis weist den Abgleichkondensator C 127 sowie die Kondensatoren C 125 und C 126 auf.

Gemäß Figur 3 besteht der Empfänger im wesentlichen aus einer Spannungsversorgung, einem integrierten Empfänger mit Hf- und Zwischenfrequenzverstärkern, einem Demodulator und einer Verstärkungsregelspannungserzeugung, einem NF-Decoder sowie einer Schaltstufe mit Schaltausgang.

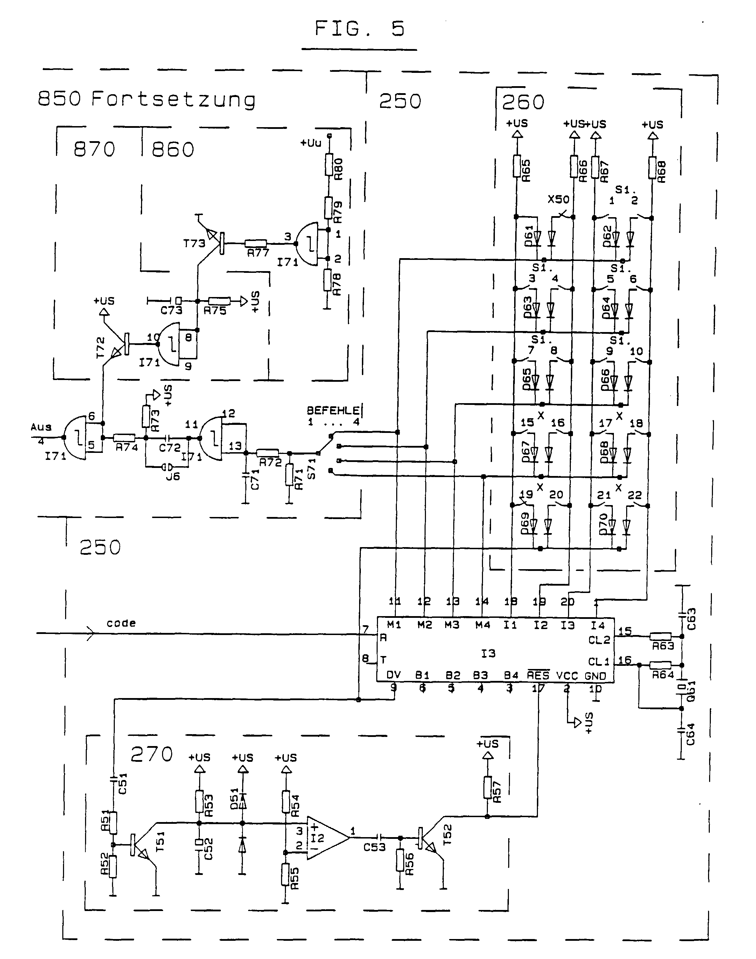

Der Schaltungsaufbau ist den Figuren 4 und 5 zu entnehmen. Im Zusammenhang mit den anhängenden Stücklisten ergibt sich aus den Schaltbildern der Figuren 2, 4 und 5 für den Fachmann eine vollständige Information.

Die Besonderheit der Empfängerschaltung sollen im folgenden noch näher beschrieben werden. Der Schwingkreis (370) der Antenne (360) besteht aus der Spule L 41 und den Kondensatoren C 42, C 43 und C 44, wobei C 42 ein abgleichbarer Kondensator ist, durch welchen die Resonanzfrequenz des Schwingkreises auf die Sendefrequenz abgestimmt werden kann. Den Ausgang der Antenne (360) bildet ein kapazitiver Teiler, welcher aus den Kondensatoren C 42/C 43 und C 44 besteht. Der Kondensator C 45 wirkt bezüglich einer Hochfrequenz wie eine Masseverbindung, so daß an dem Hochfrequenzeingang "HF EIN" des integrierten Empfängers die über dem Kondensator C 44 abfallende Differenzspannung anliegt. Der kapazitive Teiler wurde anstelle eines bisher üblichen Transformators eingesetzt.

Der Arbeitspunkt des Mischerausganges wird durch einen Widerstand (R 28) eingestellt, der vorzugsweise der Eingangsimpedanz des nachfolgenden keramischen ZF-Filters entspricht. Die Verwendung des Widerstandes R 28 anstelle des sonst üblichen Schwingkreises erhöht zwar die Signalverzerrungen, was sich jedoch bei der Übertragung des vorliegenden, digitalen Codes nicht als nachteilig erweist.

Der Oszillator, dessen Bauteile mit einer 3 beginnende zweistellige Kennummern tragen, hat exakt denselben Aufbau wie der Oszillator des zuvor beschriebenen Senders. Zur Vermeidung eines weiteren Abgleichpunktes und technischer Nachteile wird dieser externe zusätzliche Oszillator anstelle des internen Oszillators des Frequenzmischers bevorzugt. Die Demodulation des Impulsdiagrammes erfolgt passiv durch D1, C1,R1. Die Spannungserzeugung für die Verstärkungseinstellung des integrierten Empfängers erfolgt über einen aktiven Spitzenwertgleichrichter. Die Regelumsetzung des demodulierten Signals erfolgt nach einer 2-fachen Verstärkung durch einen als Komparator geschalteten Teil des Oparationsverstärkers I2 auf NMOS-Pegel für I 3.

Für die Decodierung wird der IC-Baustein I 3 verwendet, welcher vom gleichen Typ ist, wie der IC-Baustein der Codiereinheit, jedoch durch die gesetzte Brücke X 50 die in seinem ROM-Speicher eine der Decodierung entsprechende Festprogrammierung auswählt.

Das Codewort kann wiederum durch DIL-Schalter in Diodenmatrixschaltung eingestellt werden, wobei für den vom Kunden einzustellenden Code 10 Bit vorgesehen sind, während die übrigen Bits werksseitig eingestellt werden.

Die als "Watch Dog" gekennzeichnete Reset-Schaltung (270) besteht aus den Bauteilen, deren zweistellige Kennummern mit der Ziffer 5 beginnen.

Wie auch bei den bisher bezeichneten Bauteilen ist den Kennnummern im Falle von Widerständen ein R, im Falle von Kondensatoren ein C, im Falle von Spulen ein L, im Falle von Transistoren ein T, im Falle von Dioden ein D, im Falle der Schwingquarze ein Q und im Falle komplexerer Bausteine ein I vorangestellt. Ein vorangestelltes S kennzeichnet Schalter und ein vorangestelltes J kennzeichnet Lötkontakte.

Die Ein-/Ausgangs-Adapterschaltung besteht aus Bauteilen, deren zweistellige Kennummern mit den Ziffern 7 und 8 beginnen, wobei die Kondensatoren C 85 bis C 89 zusammen mit dem Bauelement I 81 ein Netzteil bilden. Die Ausgangsschaltung weist neben der bereits erwähnten Unterspannungserkennung auch ein sogenanntes Power-On-Reset auf, welches im Falle eines zwischenzeitlichen Stromausfalles dafür sorgt, daß der Ausgang der Schaltung beim Wiederkehren der Netzspannung im Ruhezustand verbleibt.

Die Widerstände R 81 und R 82 dienen der Strombegrenzung, während die Dioden D 83, D 84 einen Verpolungsschutz für den Gleichspannungsausgang 2, 3 bilden. Durch Überbrückung der Kontakte J 1 bis J 5 und/oder Betätigung der Schalter S 72 und/oder S 73 werden nach Empfang eines passenden Signals wahlweise entweder der Gleichspannungsausgang 2, der Wechselspannungsausgang 4, 5 oder der potentialfreie Ausgang X, Y angesteuert.

Nahezu alle Bauteile sind der SMT (Surface-Mounted-Technology) entsprechend auf Platinen angebracht, so daß sich sowohl für Sender als auch für den Empfänger eine sehr platzsparende und handliche Ausführung ergibt.

## Patentansprüche

1. Handsender zur Aussendung codierter elektromagnetischer Impulse, welche von einem darauf abgestimmten Empfänger empfangen und verarbeitet werden, vorzugsweise zur Fernbedienung von Garagentoren, wobei der Sender besteht aus:
a) einer Strom-/Spannungsversorgung (100),
b) einer codierten Impulse erzeugenden Codiereinheit (200) mit einstellbarem Code,
c) einem Impulsformer (300),
d) einem Hf-Oszillator (400),
e) einer Hf-Endstufe (500),
f) einem Filter (600) und
g) einer Antenne (700),
dadurch gekennzeichnet, daß
h) der Oszillator (400) im wesentlichen aus einem Schwingquarz (Q 111), einem Transistor (T 111) und einem Schwingkreis besteht,
- wobei der Schwingkreis, der ein sicheres Anschwingen des Oszillators gewährleistet, seinerseits eine Spule (L 111) und mindestens einen Kondensator (C 112, C 113) aufweist,
- und wobei der Schwingquarz (Q 111) direkt zwischen Basis und Kollektor des Transistors (T 111) geschaltet ist, daß
l) das zwischen Endstufe (500) und Antenne (700) geschaltete Filter (600) ein steilfankiges Tiefpaßfilter ist, welches eine Flankensteilheit von mindestens 60 dB zur ersten Oberwelle aufweist, und daß
k) von den Teilen HF-Oszillator (400), Filter (600) und Antenne (700) nur die Antenne ein Abgleichelement aufweist.

2. Sender nach Anspruch 1, bei welchem die Antenne einen Abgleichkondensator (C 127) aufweist, dadurch gekennzeichent, daß die Erregung der Antenne (L 123) über eine Anzapfung erfolgt.

3. Sender nach Anspruch 1 oder 4, dadurch gekennzeichnet, daß am Eingang der Antenne (700) ein Kondensator (C 130) zur Impedanztransformation vorgesehen ist.

4. Sender nach einem der Ansprüche 1 bis 3, dadurch gekennzeichnet, daß der Ausgang des Modulators bzw. Trapezformers (300) an der Niederpotentialseite des Endstufentransistors (T 121) angeschlossen ist.

5. Sender nach einem der Ansprüche 1 bis 4, dadurch gekennzeichent, daß als Codiereinheit (200) ein Mikrocontroller (l 151) mit einer wählbaren Zahl von Informationsbits (Codezahl) von 12 oder 22 Bits vorgesehen ist.

6. Sender nach Anspruch 5, dadurch gekennzeichnet, daß für die Einstellung eines Teiles der Codezahl eine Diodenmatrixschaltung (210) vorgesehen ist.

7. Sender nach einem der Ansprüche 5 oder 6, dadurch gekennzeichnet, daß in dem Codetelegramm 4 Bits zur Auslösung eine fest mit der Codiereinheit verschaltete Codierbrücke (220) setzbar sind.

8. Sender nach einem der Ansprüche 1 bis 7, dadurch gekennzeichnet, daß die einzelnen Bauelemente in SMD-Technik (Service Mounted Device-Technik) auf einer Platine angebracht sind.

9. Empfänger für den Empfang codierter elektromagnetischer Impulse, wie sie z. B. von einem Sender gemäß einem der Ansprüche 1 - 8 ausgesendet werden, bestehend aus:
a) einer Strom-/Spannungsversorgung (150),
b) einem HF-Empfangsteil (350) bestehend aus
1) einer HF-Eingangsschaltung (Antennenkreis, 360),
2) einem HF-/ZF-Verstärker und Mischerteil (I 4),
3) einem HF-Oszillator (340),
4) einem Demodulator (380),
5) einer Signal-Amplitudenregelschaltung und -Pegelumsetzung (390),
c) einer Decodiereinheit (250) mit Code-Wahlschaltung (260) und
d) einem Interface (Ein-/Ausgangsschaltung, 850),
dadurch gekennzeichnet, daß
- der Empfangsteil (350) einen Oszillator (340) aufweist, der im wesentlichen aus einem Schwingquarz (Q 31), einem Transistor (T 31) und einem Schwingkreis besteht,
- wobei der Schwingkreis, der ein sicheres Anschwingen des Oszillators gewährleistet, seinerseits eine Spule (L 31) und mindestens einen Kondensator (C 31, C 32), aufweist
- und wobei der Schwingquarz (Q 31) direkt zwischen Basis und Kollektor des Transistors (T 31) geschaltet ist, und daß
- von den Teilen HF-Oszillator (340) und Antenne (360) nur die Antenne ein Abgleichelement aufweist.

10. Empfänger nach Anspruch 9, dadurch gekennzeichnet, daß im Empfängerteil (350) zwischen dem Signalausgang (ZF-Aus) und dem Demodulator ein nicht abgleichbarer, breitbandiger Filter (380) geschaltet ist.

11. Empfänger nach Anspruch 9, dadurch gekennzeichnet, daß zur Einstellung des Arbeitspunktes des ZF-Mischer (I 4) zwischen den Mischerausgang und einem keramischen ZF-Filter ein Widerstand (R 28) geschaltet ist.

12. Empfänger nach Anspruch 9, dadurch gekennzeichnet, daß als Decodiereinheit (250) ein Mikrocontroller (I 3) mit einstellbarem Code vorgesehen ist.

13. Empfänger nach Anspruch 12, dadurch gekennzeichnet, daß die Decodiereinheit (250) eine Diodenmatrixschaltung (260) zur Einstellung des Codes aufweist.

14. Empfänger nach Anspruch 12 oder 13, dadurch gekennzeichnet, daß der Mikrocontroller (I 3) mit einer Reset-Schaltung (Watch Dog (279)) verbunden ist.

15. Empfänger nach einem der Ansprüche 9 bis 14, dadurch gekennzeichnet, daß die Ein-/ Ausgangsschaltung (850) eine Unterspannungserkennung (860) aufweist.

16. Empfänger nach einem der Ansprüche 9 bis 15, dadurch gekennzeichnet, daß die Ein-/Ausgangsschaltung (850) eine Power-ON-Reset Schaltung (870) enthält.

17. Empfänger nach einem der Ansprüche 9 bis 16, dadurch gekennzeichnet, daß die Ein-/Ausgangsschaltung (850) als Adapterschaltung ausgeführt ist und in Abhängigkeit von internen Lötbrücken wahlweise einen Wechselstrom Ein-/Ausgang, einen Gleichstrom Ein-/Ausgang oder einen potentialfreien Ausgang in Verbindung mit dem Gleich-/oder Wechselstromeingang aufweist.

18. Empfänger nach einem der Ansprüche 9 bis 17, dadurch gekennzeichnet, daß die Ein-/Ausgangsschaltung (850) einen Strombegrenzungs- (R 81, R 82), einen Verpolungsschutz (D 83, D 84) sowie lmpulsdauerbegrenzung (C 72, R 73, 1/4 l 41) aufweist.

19. Empfänger nach einem der Ansprüche 9 bis 18, dadurch gekennzeichnet, daß die einzelnen Bauelemente in SMD-Technik auf einer Platine angebracht sind.

## Claims

1. A portable transmitter for emitting coded electromagnetic pulses which are received and processed by a receiver tuned thereto, preferably for the remote operation of garage doors, wherein the transmitter comprises:
a) a current/voltage supply (100),
b) a coded pulse-generating coder unit (200) with settable code,
c) a pulse shaper (300),
d) an RF-oscillator (400),
e) an RF-output stage (500),
f) a filter (600), and
g) an antenna (700),
characterised in that
h) the oscillator (400) essentially comprises an oscillation quartz (Q111), a transistor (T111) and a resonance circuit,
- wherein the resonance circuit which ensures reliable starting of the oscillations of the oscillator in turn has an inductor (L111) and at least one capacitor (C112, C113), and
- wherein the oscillation quartz (Q111) is connected directly between the base and the collector of the transistor (T111),
i) the filter (600) connected between the output stage (500) and the antenna (700) is a steep-edge low-pass filter which has an edge steepness of at least 60 dB relative to the first harmonic, and
k) of the members comprising the RF-oscillator (400), the filter (600) and the antenna (700) only the antenna has an adjusting element.

2. A transmitter according to claim 1 wherein the antenna has an adjusting capacitor (C127) characterised in that excitation of the antenna (L123) is effected by way of a tapping.

3. A transmitter according to claim 1 or claim 2 characterised in that a capacitor (C130) is provided at the input of the antenna (700) for impedance transformation.

4. A transmitter according to one of claims 1 to 3 characterised in that the output of the modulator or the trapezoidal pulse shaper (300) is connected to the low-potential side of the output stage transistor (T121).

5. A transmitter according to one of claims 1 to 4 characterised in that a microcontroller (I151) with a selectable number of information bits (code number) of 12 or 22 bits is provided as the coder unit (200).

6. A transmitter according to claim 5 characterised in that a diode matrix circuit (210) is provided for setting a part of the code number.

7. A transmitter according to one of claims 5 and 6 characterised in that 4 bits for triggering purposes can be set in the code telegram by way of a coder bridge (220) which is fixedly wired to the coder unit.

8. A transmitter according to one of claims 1 to 7 characterised in that the individual components are mounted on a board using SMD-technology (Service Mounted Device-technology).

9. A receiver for receiving coded electromagnetic pulses as are emitted for example by a transmitter according to one of claims 1 to 8 comprising:
a) a current/voltage supply (150),
b) an RF-receiver portion (350) comprising
1) an RF-input circuit (antenna circuit, 360),
2) an RF/IF-amplifier and mixer portion (I4),
3) an RF-oscillator (340),
4) a demodulator (380), and
5) a signal amplitude regulating circuit and level conversion means (390),
c) a decoder unit (250) with code selection circuit (260), and
d) an interface (input/output circuit, 850),
characterised in that
- the receiver portion (350) has an oscillator (340) which essentially comprises an oscillation quartz (Q31), a transistor (T31) and a resonance circuit,
- wherein the resonance circuit which ensures reliable starting of the oscillations of the oscillator in turn has an inductor (L31) and at least one capacitor (C31, C32), and
- wherein the oscillation quartz (Q31) is connected directly between the base and the collector of the transistor (T31), and
- of the members comprising the RF-oscillator (340) and the antenna (360) only the antenna has an adjusting element.

10. A receiver according to claim 9 characterised in that a non-adjustable wide-band filter (38)) is connected in the receiver portion (350) between the signal output (IF-out) and the demodulator.

11. A receiver according to claim 9 characterised in that for setting the working point of the IF-mixer (I4) a resistor (R28) is connected between the mixer output and a ceramic IF-filter.

12. A receiver according to claim 9 characterised in that a microcontroller (I3) with settable code is provided as the decoder unit (250).

13. A receiver according to claim 12 characterised in that the decoder unit (250) has a diode matrix circuit (260) for setting the code.

14. A receiver according to claim 12 or claim 13 characterised in that the microcontroller (I3) is connected to a reset circuit (Watch Dog 279)).

15. A receiver according to one of claims 9 to 14 characterised in that the input/output circuit (850) has an undervoltage detection means (860).

16. A receiver according to one of claims 9 to 15 characterised in that the input/output circuit (850) includes a Power-ON- Reset circuit (870).

17. A receiver according to one of claims 9 to 16 characterised in that the input/output circuit (850) is in the form of an adaptor circuit and in dependence on internal solder bridges selectively has an alternating current input/output, a direct current input/output or a portential-free output in conjunction with the direct/or alternating current input.

18. A receiver according to one of claims 9 to 17 characterised in that the input/output circuit (850) has a current-limiting protecton (R81, R82), a polarity protection (D83, D84) and pulse duration limitation (C72, R73, 1/4 I 41).

19. A receiver according to one of claims 9 to 18 characterised in that the individual components are mounted on a board using SMD-technology.

## Revendications

1. Emetteur portatif pour l'émission d'impulsions électromagnétiques codées, qui sont reçues et traitées par un récepteur accordé sur ces impulsions, de préférence pour la télécommande de portes de garages, l'émetteur étant constitué par :
a) une alimentation en courant / tension (100),
b) une unité de codage (200) produisant des impulsions codées et comportant un code réglable,
c) un dispositif de mise en forme d'impulsions (300),
d) un oscillateur HF (400),
e) un étage final HF (500),
f) un filtre (600), et
g) une antenne (700),
caractérisé en ce que
h) l'oscillateur (400) est constitué essentiellement par un quartz oscillateur (Q 111), un transistor (T 111) et un circuit oscillant,
- le circuit oscillant, qui garantit une mise en oscillations sûre de l'oscillateur, comportant, de son côté, une bobine (L 111) et au moins un condensateur (C 112,C 113),
- et le quartz oscillateur (Q 111) étant branché directement entre la base et le collecteur du transistor (T 111), en ce que
i) le filtre (600) branché entre l'étage final (500) et l'antenne (700) est un filtre passe-bas à flancs raides, dont la pente des flancs est égale à au moins 60 dB par rapport au premier harmonique, et en ce que
k) parmi les composants formés par l'oscillateur HF (400), le filtre (600) et l'antenne (700), seule l'antenne possède un élément d'équilibrage.

2. Emetteur selon la revendication 1, dans lequel l'antenne possède un condensateur d'équilibrage (C 127), caractérisé en ce que l'excitation de l'antenne (L 123) s'effectue par l'intermédiaire d'une prise.

3. Emetteur selon la revendication 1 ou 2, caractérisé en ce qu'un condensateur (C 130) est prévu à l'entrée de l'antenne (700) pour la transformation d'impédance.

4. Emetteur selon l'une des revendications 1 à 3, caractérisé en ce que la sortie du modulateur ou du dispositif de mise sous forme trapézoïdale (300) des impulsions est raccordée au côté à bas potentiel du transistor (T 121) de l'étage final.

5. Emetteur selon l'une des revendications 1 à 4, caractérisé en ce qu'il est prévu, comme unité de codage (200), un microrégisseur (I 151) comportant un nombre sélectionnable de bits d'information (nombre de code) de 12 ou 22 bits.

6. Emetteur selon la revendication 5, caractérisé en ce qu'un circuit (210) en forme de matrice de diodes est prévu pour le réglage d'une partie du nombre de code.

7. Emetteur selon l'une des revendications 5 ou 6, caractérisé en ce que, dans le message constituant le code, 4 bits sont positionnables pour le déclenchement d'un pont de codage (220) raccordé de façon fixe à l'unité de codage.

8. Emetteur selon l'une des revendications 1 à 7, caractérisé en ce que les différents composants sont montés selon la technique SMD (technique Service Mounted Device) sur une platine.

9. Récepteur pour la réception d'impulsions électromagnétiques codées, telles qu'émises, par exemple, par un émetteur selon l'une des revendications 1-8, constitué par :
a) une alimentation en courant / tension (150),
b) une partie de réception HF (350) constituée par
1) un circuit d'entrée HF (circuit d'antenne, 360),
2) une partie formant amplificateur et mélangeur HF/FI (I 4),
3) un oscillateur HF (340),
4) un démodulateur (380),
5) un circuit de régulation d'amplitude du signal et de conversion de niveau du signal (390),
c) une unité de décodage (250) comportant un circuit de sélection de code (260), et
d) une interface (circuit d'entrée / sortie, 850),
caractérisé en ce que
- la partie de réception (350) comporte un oscillateur (340) qui est constitué essentiellement par un quartz oscillateur (Q 31), un transistor (T 31) et un circuit oscillant,
- le circuit oscillant, qui garantit une mise en oscillations sûre de l'oscillateur, comportant, de son côté, une bobine (L 31) et au moins un condensateur (C 31, C 32),
- et le quartz oscillateur (Q 31) étant branché directement entre la base et le collecteur du transistor (T 31), et en ce que
- parmi les composants constitués par l'oscillateur HF (340) et l'antenne (360), seule l'antenne possède un élément d'équilibrage.

10. Récepteur selon la revendication 9, caractérisé en ce qu'un filtre non équilibrable à large bande (380) est branché, dans la partie de réception (350), entre la sortie du signal (sortie FI) et le démodulateur.

11. Récepteur selon la revendication 9, caractérisé en ce que, pour le réglage du point de fonctionnement du mélangeur FI (I 4), une résistance (R 28) est branchée entre la sortie du mélangeur et un filtre céramique FI.

12. Récepteur selon la revendication 9, caractérisé en ce qu'il est prévu, comme unité de décodage (250), un microrégisseur (I 3) possédant un code réglable.

13. Récepteur selon la revendication 12, caractérisé en ce que l'unité de décodage (250) possède un circuit en fourre de matrice de diodes (260) pour le réglage du code.

14. Récepteur selon la revendication 12 ou 13, caractérisé en ce que le microrégisseur (I 3) est relié à un circuit de remise à l'état initial (Watch Dog (279)).

15. Récepteur selon l'une des revendications 9 à 14, caractérisé en ce que le circuit d'entrée / sortie (850) possède une unité d'identification des manques de tension (860).

16. Récepteur selon l'une des revendications 9 à 15, caractérisé en ce que le circuit d'entrée / sortie (850) contient un circuit de mise sous tension et de remise à l'état initial (870).

17. Récepteur selon l'une des revendications 9 à 16, caractérisé en ce que le circuit d'entrée / sortie (850) est agencé sous la forme d'un circuit adaptateur et possède au choix, en fonction de ponts de brasure internes, une entrée / sortie pour un courant alternatif, une entrée/ sortie pour un courant continu ou une sortie à potentiel libre en liaison avec une entrée de courant continu / ou de courant alternatif.

18. Récepteur selon l'une des revendications 9 à 17, caractérisé en ce que le circuit d'entrée / sortie (850) possède une unité de limitation de courant (R 81, R 82), une unité de protection contre une inversion de polarité (D 83, D 84) ainsi qu'une unité de limitation de la durée des impulsions (C 72, R 73, 1/4 I 41).

19. Récepteur selon l'une des revendications 9 à 18, caractérisé en ce que les différents composants sont montés selon la technique SMD sur une platine.
